# EUROPEAN PATENT SPECIFICATION

(11) **EP 4 659 176 B1**
(45) Date of publication and mention of the grant of the patent: **05.08.2026**
(21) Application number: 24701152.1
(22) Date of filing: 16.01.2024
(51) Int. Cl.: G06Q 20/20, G06Q 20/34, G07F 7/08

(54) **SYSTEM FOR MANAGING A FINANCIAL TRANSACTION**
VERFAHREN ZUR VERWALTUNG EINER FINANZTRANSAKTION
PROCEDE DE GESTION D'UNE TRANSACTION FINANCIERE

(30) Priority: 30.01.2023 EP 23305116
(43) Date of publication of application: 10.12.2025
(73) Proprietor: THALES DIS FRANCE SAS, 92190 Meudon (FR)
(72) Inventor: PALADJIAN, Pierre, 13705 La Ciotat (FR); COOREMAN, Pascal, 13705 La Ciotat (FR)
(74) Representative: Grevin, Emmanuel
(86) International application number: PCT/EP2024/050923
(87) International publication number: WO 2024/160537

(56) References cited:
- EP-A1- 4 053 772
- WO-A1-2011/056745
- WO-A1-2012/140625
- US-A1- 2019 272 532
- US-A1- 2019 392 453

## Description

### (Field of the invention)

The present invention relates to systems for managing a financial transaction during a face-to-face payment transaction involving a payment instrument. It relates particularly to systems for controlling execution of a financial transaction between a payment instrument and a payment terminal involved in an in-person payment transaction.

### (Background of the invention)

Financial transactions or electronic funds transfers are done today through the interaction of a payment instrument with a connected payment terminal, and the exchange of a payload with a remote server. For example, the financial transaction may be a payment carried out via a Point-Of-Sale (POS) terminal or a cash withdrawal via an Automated Teller Machine (ATM). Such transactions are called in-person transactions (or proximity transactions or face-to-face transactions) because the cardholder is at the same location as the payment terminal.

Conventional payment terminals are devices designed to interface with payment instruments to make electronic funds transfers. Conventional payment terminals are considered as secure devices because some of their essential hardware components and their software/firmware components passed security tests. For example, the PIN pad is tamper resistant and embeds cryptographic keys to cipher the PIN entry. The Payment Card Industry - PIN Transaction Security (PCI PTS) certification brings a high security level guarantee to conventional payment terminals.

A problem arises with the new generation of POS terminals, called SoftPOS (or Software POS), which leverages Commercial Off-The-Shelf (COTS) mobile devices. A SoftPOS comprises a POS terminal software application able to accept payments, which runs on a standard NFC mobile phone that could be owned by the merchant which can be a taxi driver, a plumber, a street vendor, a clothing store or a supermarket for instance. Payment Card Industry - PIN Transaction Security (PCI PTS) standard cannot apply on such devices, considering their commercial off-the-shelf nature. It becomes consequently possible to cheat a customer with a fake POS terminal application loaded by a fraudulent merchant on their mobile phone, and to perform a financial transaction for a different amount of money than the one displayed by a fake POS terminal.

A payment method involving a payment device similar to the present application is described in patent publication EP4053772A1.

### (Summary of the Invention)

There is a need to improve security of the way to manage a face-to-face financial transaction with a SoftPOS terminal.

The invention aims at solving the above-mentioned technical problem.

An object of the present invention is a payment instrument assigned to a user. The payment instrument is configured to get a transaction data from a payment terminal in response to a first tap with the payment terminal leading to the start of a financial transaction. The payment instrument comprises a preset parameter indicating whether a three-tap option is enabled. The payment instrument is configured to monitor the parameter during the first tap. If the payment instrument detects that the parameter indicates that the three-tap option is enabled, the payment instrument is configured:
- to record a first indicator indicating that the financial transaction is in progress;
- in response to a second tap with a personal device, to send a subset of the transaction data to the personal device and to record a second indicator indicating that the payment instrument sent the subset to the personal device,
- in response to a third tap with the payment terminal, to use said first and second indicators for performing a check specified by a security policy stored in the payment instrument, said security policy specifying that the financial transaction should be in progress and said subset should have been sent to the personal device; and
- in case of successful check, to continue treatments required by the financial transaction, and in case of unsuccessful check, to reject the financial transaction.

Advantageously, the payment instrument may comprise a hardware sensor and if the payment instrument detects that the sensor is activated during the first tap, the payment instrument may be configured to invert the parameter.

Advantageously, the sensor may be a push button, a capacitive button, a biometric sensor, a mechanical sensor, an optical sensor or an electrical sensor.

Advantageously, whether the check is successful or not, the payment instrument may be configured to reset said first indicator and said second indicator after performing the check.

Advantageously, the transaction data may comprise a first identifier of the payment terminal. In response to the third tap, the payment instrument may be configured to receive from the payment terminal a second identifier of the payment terminal and said security policy may specify that said first identifier should be equal to said second identifier.

Advantageously, the transaction data may comprise a first timestamp. In response to the third tap, the payment instrument may be configured to receive from the payment terminal a second timestamp and said security policy may specify that the difference between said first and second timestamps should be less than a preset duration.

Advantageously, the security policy may specify that the payment instrument should have received an acknowledgement data generated by the personal device after capturing from the user an agreement entry that reflects acknowledgement of awareness of the subset by the user.

Advantageously, the financial transaction may be a payment transaction and the subset may comprise a payment amount.

Advantageously, the payment instrument may be a smart card, a ring, a keychain, a bracelet or a microchip inserted in the body of the user.

Another object of the present invention is a system comprising a payment instrument according to the invention and a personal device. The payment instrument may comprise a first key and the personal device may comprise a second key, both said first and second keys having being defined during a pairing operation. In response to the second tap, the payment instrument and the personal device may be configured to establish a secure channel using both said first and second keys; and the payment instrument and the personal device may be configured to exchange data through the secure channel.

Advantageously, the personal device may be a phone, a tablet PC, a Personal Digital Assistant or a wearable device like a ring, a keychain, a bracelet or a pair of glasses.

Another object of the present invention is a method for managing a financial transaction between a payment terminal and a payment instrument assigned to a user. In response to a first tap between the payment instrument and the payment terminal, the financial transaction starts and the payment instrument gets a transaction data from the payment terminal. The payment instrument comprises a preset parameter indicating whether a three-tap option is enabled. The payment instrument monitors the parameter during the first tap; and if the payment instrument detects that the parameter indicates that a three-tap option is enabled:
- the payment instrument records a first indicator indicating that the financial transaction is in progress;
- in response to a second tap between the payment instrument and a personal device, the personal device gets a subset of the transaction data sent by the payment instrument and the payment instrument records a second indicator indicating that the payment instrument sent the subset to the personal device,
- the personal device provides said user with the subset,
- in response to a third tap between the payment instrument and the payment terminal, the payment instrument uses said first and second indicators for performing a check specified by a security policy stored in the payment instrument, said security policy specifying that the financial transaction should be in progress and said subset should have been sent to the personal device; and
- in case of successful check, the payment instrument continues treatments required by the financial transaction and in case of unsuccessful check, the payment instrument rejects the financial transaction.

Advantageously, the payment instrument may comprise a hardware sensor. If the payment instrument detects that the sensor is activated during the first tap, the payment instrument may invert the parameter.

Advantageously, the transaction data may comprise a first identifier of the payment terminal, in response to the third tap, the payment instrument may receive from the payment terminal a second identifier of the payment terminal and said security policy may specify that the said first identifier should be equal to said second identifier.

Advantageously, the transaction data may comprise a first timestamp. In response to the third tap, the payment instrument may receive from the payment terminal a second timestamp and said security policy may specify that the difference between said first and second timestamps should be less than a preset duration.

### (Brief description of the drawings)

Other characteristics and advantages of the present invention will emerge more clearly from reading the following description of a number of preferred embodiments of the invention with reference to the corresponding accompanying drawings in which:
- Figure 1 shows an exemplary flow diagram for managing a face-to-face payment transaction according to an example of the invention; and
- Figure 2 shows a diagram of architecture of a system for managing a face-to-face payment transaction according to an example of the invention.

### (Detailed description of the preferred embodiments)

The invention may apply to any type of contactless payment instrument usually associated to a user (i.e. cardholder). The payment instrument may be a physical smart card, a smartwatch, a wearable device or a digital bank card hosted in a mobile phone for instance.

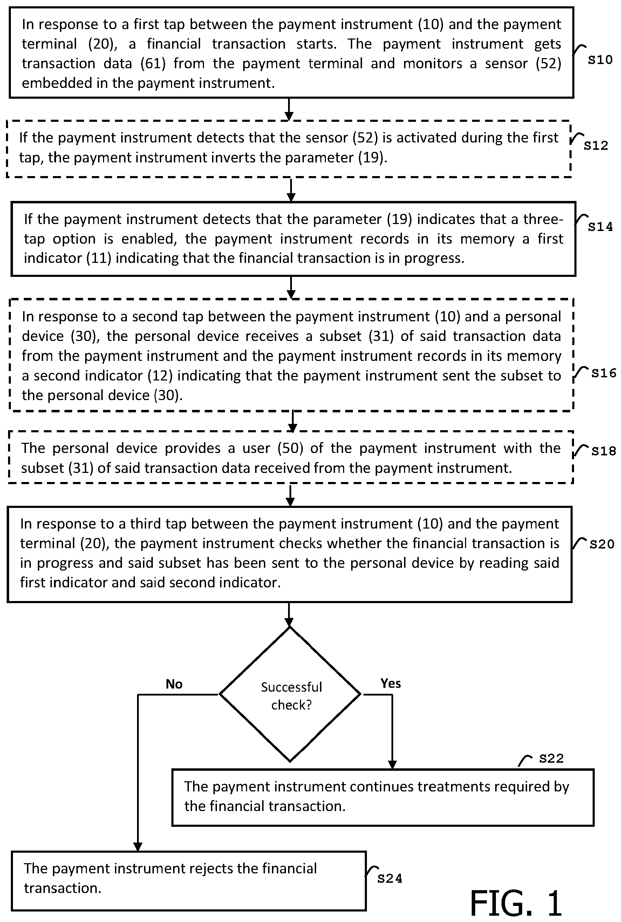

Figure 1 shows an exemplary flow diagram for managing a payment transaction according to an example of the invention.

In this example, the payment instrument 10 is a physical banking card intended to be used by its associated genuine user 50 (i.e. bank customer) for payment transaction or cash withdrawal.

The payment instrument 10 embeds a secure element comprising a hardware processing unit, a memory storing an operating system and a banking application designed to contribute to payment services. The payment instrument 10 is a proximity card able to communicate through a contactless protocol as defined by the ISO 14443 standard or Near Field Communications (NFC) standards for instance. The payment instrument may be configured to communicate through a contact communication protocol in addition to the contactless communication protocol.

The payment instrument is adapted to exchange data with a personal device 30 through a contactless communication session relying on a contactless technology like Wi-Fi (as defined by ISO/CEI 8802-11 standard), Bluetooth Low Energy^{®} (BLE) or Ultra Wideband (UWB) for instance. Preferably, the personal device 30 is a smartphone used by the user of the payment instrument.

Let us assume that the user of the payment instrument wants to perform a face-to-face payment transaction with a payment terminal 20. In other words, the payment instrument and the payment terminal are placed close to each other. The user may tap the payment instrument on the payment terminal to allow the start of the payment transaction at step S10. A tap is to manually bring the payment instrument closed enough to the payment terminal so that a contactless communication channel can be established between the payment instrument and the payment terminal.

In response to the initial tap, the payment instrument receives a transaction data 61 from the payment terminal. The transaction data 61 typically contains a money amount and may comprise other transaction parameters like the date, a reference of the payment instrument or a reference of the merchant.

The payment instrument comprises a preset parameter 19 indicating whether the three-tap option is enabled (i.e. has been activated) and monitors the parameter 19 during the session established between the payment instrument and the payment terminal by the initial tap.

Only if the payment instrument detects that the parameter 19 indicates that the three-tap option is enabled, the payment instrument executes the following sequence of actions:
- The payment instrument records a first indicator 11 indicating that the financial transaction is in progress (step S14).
- In response to a tap (i.e. second tap) between the payment instrument and the personal device 30, the payment instrument sends a subset 31 of the transaction data to the personal device and records a second indicator 12 indicating that the payment instrument sent the subset to the personal device (step S16).
- In response to a new tap (i.e. third tap) between the payment instrument and the payment terminal, the payment instrument uses said first and second indicators for performing a check specified by a security policy 14 stored in the payment instrument (step S20). The security policy specifies that both the financial transaction should be in progress and said subset 31 should have been sent to the personal device to pursue the transaction.
- In case of successful check, the payment instrument continues treatment(s) required by the financial transaction (step S22), and in case of unsuccessful check, the payment instrument rejects the financial transaction (step S24).

If the personal device 30 received the subset 31 of the transaction data, the personal device provides the user 50 of the payment instrument with the subset 31. For instance, the personal device may display the subset on its own screen. Alternatively, the user may get the subset through an audio channel. Since the user 50 is informed of the relevant transaction parameter(s) (e.g. the money amount declared by the terminal to the payment instrument), they can make the decision whether to perform the third tap (step S20) or not to continue the financial transaction.

If the payment instrument detected that the parameter 19 indicates that the three-tap option is not enabled, the payment instrument can behave like a conventional contactless payment instrument that may authorize continuation of the financial transaction in response to the new tap with the payment terminal.

In some embodiments, the payment instrument resets (or erases) the first indicator and the second indicator after performing the check specified by the security policy 14 regardless of the result of the check.

In some embodiments, the payment instrument may embed a sensor 52 allowing switching the parameter 19. For instance, the payment instrument may comprise a hardware sensor 52 and monitor the sensor during the session established between the payment instrument and the payment terminal by the initial tap. If the payment instrument detects that the sensor is activated (by the user 50) during the first tap, the payment instrument inverts the parameter 19.

Let us assume that the parameter 19 is preset to a value indicating that the three-tap option is disabled. If the payment instrument detects that the sensor is activated (by the user 50) during the session established with the payment terminal by the initial tap, the payment instrument changes the parameter 19 to a value indicating that the three-tap option is enabled.

In some embodiments, the sensor 52 can be a push button, a capacitive button, a mechanical sensor, an optical sensor or an electrical sensor.

In some embodiments, the sensor 52 can be a biometric sensor and the payment instrument can consider the sensor as activated either when the sensor detects the presence of a part of the user's body near its detection area or if the captured biometric data corresponds to a prerecorded reference pattern. Preferably, the biometric sensor may be a fingerprint sensor.

In some embodiments, the payment instrument may check that the initial tap (step S10) and the last tap (step S20) are done with the same payment terminal and refuse to continue the transaction if this is not the case. For example, the transaction data 61 may comprise a first identifier of the payment terminal, the payment instrument may receive from the payment terminal a second identifier of the payment terminal in response to the third tap, and the security policy 14 may specify that the first identifier should be equal to the second identifier to continue the transaction.

In some embodiments, the payment instrument may check that the initial tap and the last tap are done within a limited time period and refuse to continue the transaction if this is not the case. For example, the transaction data 61 may comprise a first timestamp. In response to the third tap, the payment instrument may receive from the payment terminal a second timestamp and the security policy 14 may specify that the difference between the first and second timestamps should be less than a preset duration 18.

In some embodiments, the security policy 14 may specify that the payment instrument should have received an acknowledgement data 32 generated by the personal device 30 after capturing from the user an agreement entry 38 reflecting acknowledgement of awareness of the subset by the user. Thus, the payment instrument may wait for the acknowledgement data 32 before accepting to continue treatments required by the transaction. The payment instrument may deny the transaction if no acknowledgement data 32 has been received after a predefined duration.

In some embodiments, the payment instrument may comprise a first key 13 and the personal device 30 may comprise a second key 33. Typically, both said first and second keys may have being defined and stored during a prior pairing operation between the payment instrument and the personal device. These keys may be symmetric keys or based on a public/private key pair. In response to a tap between the payment instrument and the personal device, the payment instrument and the personal device may automatically establish a secure channel using both the first and second keys. Then they may exchange messages and data through the secure channel. Thus, the card has the guarantee that the subset 31 is not unduly received or spied by an unwanted device.

The personal device is not limited to a phone and may be a tablet PC, a Personal Digital Assistant (PDA) or a wearable device like a ring, a keychain, a bracelet or a pair of glasses for instance.

The payment instrument is not limited to a smart card and may be a ring, a keychain, a bracelet or a microchip inserted in the body of the user for instance.

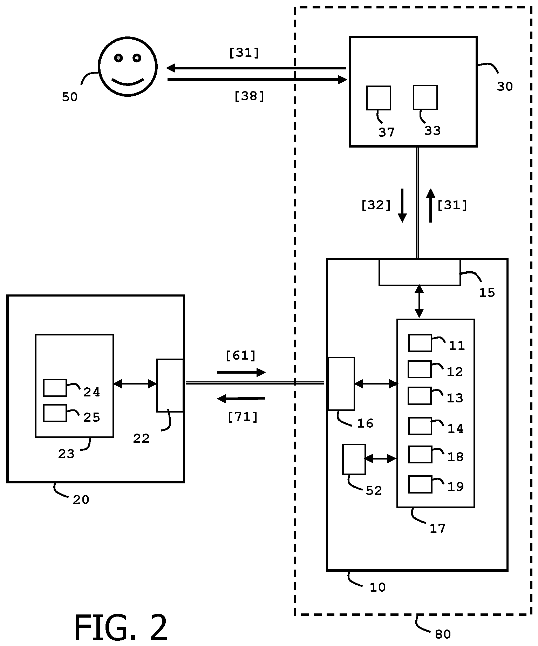

Figure 2 shows a diagram of architecture of a system 80 for managing a face-to-face payment transaction according to an example of the invention.

In this example, the system 80 is a payment system comprising both a payment instrument 10 assigned to a user 50 and a personal device 30. The payment instrument 10 is a smart card having a secure element 17 including both a hardware processor and a non-volatile memory.

The smart card 10 comprises a physical communication interface 16 able to exchange data with a payment terminal 20 through a contactless channel.

The smart card 10 comprises a physical communication interface 15 able to exchange data with the personal device 30 through a contactless communication session relying on a contactless technology. Preferably, the smart card 10 is designed to communicate with the personal device 30 through a Bluetooth Low Energy^{®} (BLE) channel.

The payment terminal 20 may be a SoftPOS terminal. It comprises a hardware processor (not shown), a physical communication interface 22 adapted to exchange data with the payment instrument 10 in contactless mode. For instance, the communication interface 22 may be adapted to exchange data through an ISO/IEC-14443 or a Near Field Communications (NFC) communication session.

The payment terminal may be a commercial off-the-shelf smartphone comprising a memory 23 storing a Point-Of-Sale terminal software application 24.

Alternatively, the payment terminal may be a conventional Point-Of-Sale terminal or an Automated Teller Machine (ATM).

In response to a first tap leading to the start of a financial transaction with the payment terminal 20, the payment instrument 10 is configured to receive a transaction data 61 prepared and sent by the payment terminal. The payment instrument comprises a preset parameter 19 that indicates whether the three-tap option is enabled (i.e. is activated). The payment instrument is configured to monitor the parameter 19 during the first tap.

If the payment instrument detects that the parameter 19 indicates that the three-tap option is enabled, the payment instrument is configured:
to record in its own memory a first indicator 11 indicating that the financial transaction is in progress;
in response to a second tap with a personal device 30, to send a subset 31 of the transaction data 61 to the personal device and to record a second indicator 12 which indicates that the payment instrument sent the subset 31 to the personal device;
in response to a subsequent third tap with the payment terminal, to use said first and second indicators for performing a check specified by a security policy 14 stored in the memory of the payment instrument; the security policy specifying that the financial transaction should be rejected if the financial transaction is not in progress or said subset has not been sent to the personal device; and
in case of successful check, to continue treatments required to pursue the financial transaction, and in case of unsuccessful check, to reject the financial transaction.

The payment instrument may send to the payment terminal 20 a response 71 containing an element reflecting the decision it made to pursue or reject the pending transaction.

It should be noted that the payment instrument uses the first indicator 11 to link the first and third taps.

In some embodiments, the payment instrument may comprise a hardware sensor 52 and the payment instrument may be configured to monitor the hardware sensor 52 during the first tap. If the payment instrument detects that the sensor is activated during the first tap, the payment instrument may be configured to inverts the parameter 19. For example, the payment instrument may replace a value indicating that the three-tap option is disabled with a new value indicating that the three-tap option is enabled in the parameter 19.

According to the user's instruction captured through the sensor 52, the payment instrument can adapt its behavior for the continuation of the processing of the payment transaction. For example, the user 50 can deliberately activate the three-tap option when starting a transaction with a suspicious payment terminal.

The hardware sensor 52 may be a push button, a capacitive button, a mechanical sensor, an optical sensor or an electrical sensor. In some embodiments, hardware sensor 52 may be a biometric sensor like a fingerprint scanner.

In some embodiments, the payment instrument is configured to reset both the first indicator and second indicator after performing the check, whether the check is successful or not.

The security policy 14 can be implemented as a set of rule(s). A first rule specifies that both the financial transaction should be in progress and said subset 31 should have been sent to the personal device to pursue the transaction. In addition, the security policy 14 may comprise any combination of supplementary rule(s) as detailed below.

In some embodiments, the transaction data 61 may comprise a first identifier 25 of the payment terminal. In response to the third tap, the payment instrument may be configured to receive (and store) from the payment terminal a second identifier of the payment terminal. The security policy14 may comprise a rule specifying that the first identifier should be equal to a second identifier to pursue the transaction. The payment terminal may be configured to check that the first and third taps are performed with the same payment instrument.

In some embodiments, the transaction data 61 may comprise a first timestamp. In response to the third tap, the payment instrument may be configured to receive from the payment terminal a second timestamp. The security policy 14 may comprise a rule specifying that the difference between said first and second timestamps should be less than a preset duration 18 to pursue the transaction. The payment terminal may be configured to check that the first and third taps are performed within a limited time.

In some embodiments, the security policy 14 may comprise a rule specifying that the payment instrument should have received an acknowledgement data 32 generated by the personal device after capturing from the user an agreement entry 38 reflecting acknowledgement of awareness of the subset 31 by the user. The payment terminal may be configured to reject the transaction if did not received an acknowledgement data 32 from the personal device 30.

The personal device 30 may comprise a banking application 37 designed to receive the subset 31 sent by the payment instrument and to present the subset 31 to the user 50. The banking application 37 may be configured to capture the agreement entry 38 from the user 50 through a physical user interface of the personal device 30 and to generate and send the acknowledgement data 32 reflecting a successful capture of the agreement entry 38.

Preferably, the banking application 37 is implemented as a set of program instructions executed by a hardware computer embedded in the personal device.

The invention is not limited to the described embodiments or examples. In particular, the described examples and embodiments may be combined.

The invention is not limited to Banking smart cards and applies to any payment instruments able to participate to a payment transaction like digital cards for instance.

The invention may apply to EMV^{©} transactions, Central Bank Digital Currencies (CBDC) transactions or any other banking flows.

Thanks to some embodiments of the invention, during a proximity (i.e. face-to-face) payment transaction performed on SoftPOS, the payment instrument can check that the cardholder had the opportunity to control one or more transaction parameters (through the user interface of the personal device) before accepting or rejecting the transaction. Thus, a hacked or fake payment terminal cannot cheat the user by displaying an amount different from the transaction amount sent to the payment instrument.

Although some embodiments of the invention are well suited for increasing security of transaction carried out via SoftPOS terminals, they can be used on any type of payment terminal.

Some embodiments of the invention solve the apprehension that a cardholder may experience when making a purchase from a merchant equipped with a SoftPOS terminal, which looks like a standard mobile device.

Thanks to some embodiments of the invention, the duration of the whole payment transaction remains reasonable for the user and easy to perform.

## Claims

1. A system (80) comprising a payment instrument (10) and a personal device (30), the payment instrument (10) being assigned to a user (50), the payment instrument being configured to get a transaction data (61) from the payment terminal (20) in response to a first tap with the payment terminal leading to the start of a financial transaction;
wherein the payment instrument comprises a preset parameter (19) indicating whether a three-tap option is enabled and is configured to monitor the parameter during the first tap; and
wherein, if the payment instrument detects that the parameter indicates that the three-tap option is enabled, the payment instrument is configured:
to record a first indicator (11) indicating that the financial transaction is in progress;
in response to a second tap with a personal device (30), to send a subset (31) of the transaction data to the personal device and to record a second indicator (12) indicating that the payment instrument sent the subset to the personal device,
in response to a third tap with the payment terminal, to use said first and second indicators for performing a check specified by a security policy (14) stored in the payment instrument, said security policy specifying that the financial transaction should be in progress and said subset should have been sent to the personal device;
in case of successful check, to continue treatments required by the financial transaction, and in case of unsuccessful check, to reject the financial transaction;
wherein the payment instrument comprises a first key (13) and the personal device comprises a second key (33), both said first and second keys having being defined during a pairing operation;
wherein in response to the second tap, the payment instrument and the personal device are configured to establish a secure channel using both said first and second keys; and
wherein the payment instrument and the personal device are configured to exchange data through the secure channel.

2. The system according to claim 1, wherein the payment instrument comprises a hardware sensor (52); and wherein, if the payment instrument detects that the sensor is activated during the first tap, the payment instrument is configured to inverts the parameter.

3. The system according to claim 2, wherein the sensor is a push button, a capacitive button, a biometric sensor, a mechanical sensor, an optical sensor or an electrical sensor.

4. The system according to claim 1, wherein whether the check is successful or not, the payment instrument is configured to reset said first indicator and said second indicator after performing the check.

5. The system according to claim 1, wherein the transaction data (61) comprise a first identifier of the payment terminal, wherein in response to the third tap, the payment instrument is configured to receive from the payment terminal a second identifier of the payment terminal and wherein said security policy specifies that said first identifier should be equal to said second identifier.

6. The system according to claim 1, wherein the transaction data (61) comprise a first timestamp, wherein in response to the third tap, the payment instrument is configured to receive from the payment terminal a second timestamp and wherein said security policy specifies that the difference between said first and second timestamps should be less than a preset duration (18).

7. The system according to claim 1, wherein said security policy specifies that the payment instrument should have received an acknowledgement data (32) generated by the personal device after capturing from the user an agreement entry (38) reflecting acknowledgement of awareness of the subset by the user.

8. The system according to claim 1, wherein the financial transaction is a payment transaction and wherein the subset comprises a payment amount.

9. The system according to claim 1, wherein the payment instrument is a smart card, a ring, a keychain, a bracelet or a microchip inserted in the body of the user.

10. The system according to claim 1, wherein the personal device is a phone, a tablet PC, a Personal Digital Assistant or a wearable device like a ring, a keychain, a bracelet or a pair of glasses.

## Patentansprüche

1. System (80), umfassend ein Zahlungsinstrument (10) und eine persönliche Vorrichtung (30), wobei das Zahlungsinstrument (10) einem Benutzer (50) zugeordnet ist, wobei das Zahlungsinstrument konfiguriert ist, um als Reaktion auf ein erstes Antippen mit dem Zahlungsendgerät, das zu dem Beginn einer Finanztransaktion führt, Transaktionsdaten (61) von dem Zahlungsendgerät (20) zu erhalten;
wobei das Zahlungsinstrument einen voreingestellten Parameter (19) umfasst, der angibt, ob eine Drei-Antipp-Option aktiviert ist, und konfiguriert ist, um den Parameter während des ersten Antippens zu überwachen; und
wobei, wenn das Zahlungsinstrument erfasst, dass der Parameter angibt, dass die Drei-Antipp-Option aktiviert ist, das Zahlungsinstrument konfiguriert ist:
um einen ersten Indikator (11) aufzuzeichnen, der angibt, dass die Finanztransaktion in Bearbeitung ist;
um als Reaktion auf ein zweites Antippen mit einer persönlichen Vorrichtung (30) eine Teilmenge (31) der Transaktionsdaten an die persönliche Vorrichtung zu senden und einen zweiten Indikator (12) aufzuzeichnen, der angibt, dass das Zahlungsinstrument die Teilmenge an die persönliche Vorrichtung gesendet hat,
um als Reaktion auf ein drittes Antippen mit dem Zahlungsendgerät die ersten und zweiten Indikatoren zum Durchführen einer Prüfung zu verwenden, die durch eine in dem Zahlungsinstrument gespeicherte Sicherheitsrichtlinie (14) spezifiziert ist, wobei die Sicherheitsrichtlinie spezifiziert, dass die Finanztransaktion in Bearbeitung sein sollte und die Teilmenge an die persönliche Vorrichtung gesendet worden sein sollte;
um in einem Falle einer erfolgreichen Prüfung die durch die Finanztransaktion erforderlichen Verarbeitungen fortzusetzen, und in einem Falle einer nicht erfolgreichen Prüfung die Finanztransaktion abzulehnen;
wobei das Zahlungsinstrument einen ersten Schlüssel (13) umfasst und die persönliche Vorrichtung einen zweiten Schlüssel (33) umfasst, wobei sowohl der erste als auch der zweite Schlüssel während eines Kopplungsvorgangs definiert wurden;
wobei als Reaktion auf das zweite Antippen das Zahlungsinstrument und die persönliche Vorrichtung konfiguriert sind, um unter Verwendung sowohl des ersten als auch des zweiten Schlüssels einen sicheren Kanal aufzubauen; und
wobei das Zahlungsinstrument und die persönliche Vorrichtung konfiguriert ist, um Daten über den sicheren Kanal auszutauschen.

2. System nach Anspruch 1, wobei das Zahlungsinstrument einen Hardware-Sensor (52) umfasst; und wobei, wenn das Zahlungsinstrument erfasst, dass der Sensor während des ersten Antippens aktiviert ist, das Zahlungsinstrument konfiguriert ist, um den Parameter zu invertieren.

3. System nach Anspruch 2, wobei der Sensor eine Drucktaste, eine kapazitive Taste, ein biometrischer Sensor, ein mechanischer Sensor, ein optischer Sensor oder ein elektrischer Sensor ist.

4. System nach Anspruch 1, wobei, unabhängig davon, ob die Prüfung erfolgreich ist oder nicht, das Zahlungsinstrument konfiguriert ist, um den ersten Indikator und den zweiten Indikator nach dem Durchführen der Prüfung zurückzusetzen.

5. System nach Anspruch 1, wobei die Transaktionsdaten (61) eine erste Kennung des Zahlungsendgeräts umfassen, wobei als Reaktion auf das dritte Antippen das Zahlungsinstrument konfiguriert ist, um von dem Zahlungsendgerät eine zweite Kennung des Zahlungsendgeräts zu empfangen, und wobei die Sicherheitsrichtlinie spezifiziert, dass die erste Kennung gleich der zweiten Kennung sein sollte.

6. System nach Anspruch 1, wobei die Transaktionsdaten (61) einen ersten Zeitstempel umfassen, wobei als Reaktion auf das dritte Antippen das Zahlungsinstrument konfiguriert ist, um von dem Zahlungsendgerät einen zweiten Zeitstempel zu empfangen, und wobei die Sicherheitsrichtlinie spezifiziert, dass die Differenz zwischen dem ersten und dem zweiten Zeitstempel geringer als eine voreingestellte Dauer (18) sein sollte.

7. System nach Anspruch 1, wobei die Sicherheitsrichtlinie spezifiziert, dass das Zahlungsinstrument Bestätigungsdaten (32) empfangen haben soll, die durch die persönliche Vorrichtung nach einem Aufnehmen einer Zustimmungseingabe (38) von dem Benutzer erzeugt werden, die eine Bestätigung der Kenntnisnahme der Teilmenge durch den Benutzer widerspiegelt.

8. System nach Anspruch 1, wobei die Finanztransaktion eine Zahlungstransaktion ist und wobei die Teilmenge einen Zahlungsbetrag umfasst.

9. System nach Anspruch 1, wobei das Zahlungsinstrument eine Smartcard, ein Ring, ein Schlüsselanhänger, ein Armband oder ein in den Körper des Benutzers eingesetzter Mikrochip ist.

10. System nach Anspruch 1, wobei die persönliche Vorrichtung ein Telefon, ein Tablet-PC, ein Personal Digital Assistant oder eine tragbare Vorrichtung wie ein Ring, ein Schlüsselanhänger, ein Armband oder eine Brille ist.

## Revendications

1. Système (80) comprenant un instrument de paiement (10) et un dispositif personnel (30), l'instrument de paiement (10) étant attribué à un utilisateur (50), l'instrument de paiement étant configuré pour obtenir des données de transaction (61) provenant du terminal de paiement (20) en réponse à un premier tapotement avec le terminal de paiement conduisant au début d'une transaction financière ;
dans lequel l'instrument de paiement comprend un paramètre prédéfini (19) indiquant si une option à trois tapotements est activée et est configuré pour surveiller le paramètre pendant le premier tapotement ; et
dans lequel, si l'instrument de paiement détecte que le paramètre indique que l'option à trois tapotements est activée, l'instrument de paiement est configuré pour :
enregistrer un premier indicateur (11) indiquant que la transaction financière est en cours ;
en réponse à un deuxième tapotement avec un dispositif personnel (30), envoyer un sous-ensemble (31) des données de transaction au dispositif personnel et enregistrer un second indicateur (12) indiquant que l'instrument de paiement a envoyé le sous-ensemble au dispositif personnel,
en réponse à un troisième tapotement avec le terminal de paiement, utiliser lesdits premier et second indicateurs pour effectuer un contrôle spécifié par une politique de sécurité (14) stockée dans l'instrument de paiement, ladite politique de sécurité spécifiant que la transaction financière doit être en cours et que ledit sous-ensemble doit avoir été envoyé au dispositif personnel ;
en cas de contrôle réussi, poursuivre les traitements requis par la transaction financière, et en cas d'échec du contrôle, rejeter la transaction financière ;
dans lequel l'instrument de paiement comprend une première clé (13) et le dispositif personnel comprend une seconde clé (33), lesdites première et seconde clés ayant été définies au cours d'une opération d'appariement ;
dans lequel, en réponse au deuxième tapotement, l'instrument de paiement et le dispositif personnel sont configurés pour établir un canal sécurisé à l'aide desdites première et seconde clés ; et
dans lequel l'instrument de paiement et le dispositif personnel sont configurés pour échanger des données par le biais du canal sécurisé.

2. Système selon la revendication 1, dans lequel l'instrument de paiement comprend un capteur matériel (52) ; et dans lequel, si l'instrument de paiement détecte que le capteur est activé lors du premier tapotement, l'instrument de paiement est configuré pour inverser le paramètre.

3. Système selon la revendication 2, dans lequel le capteur est un bouton-poussoir, un bouton capacitif, un capteur biométrique, un capteur mécanique, un capteur optique ou un capteur électrique.

4. Système selon la revendication 1, dans lequel, que le contrôle soit réussi ou non, l'instrument de paiement est configuré pour réinitialiser ledit premier indicateur et ledit second indicateur après avoir effectué le contrôle.

5. Système selon la revendication 1, dans lequel les données de transaction (61) comprennent un premier identifiant du terminal de paiement, dans lequel, en réponse au troisième tapotement, l'instrument de paiement est configuré pour recevoir en provenance du terminal de paiement un second identifiant du terminal de paiement et dans lequel ladite politique de sécurité spécifie que ledit premier identifiant doit être égal audit second identifiant.

6. Système selon la revendication 1, dans lequel les données de transaction (61) comprennent un premier horodatage, dans lequel, en réponse au troisième tapotement, l'instrument de paiement est configuré pour recevoir en provenance du terminal de paiement un second horodatage et dans lequel ladite politique de sécurité spécifie que la différence entre lesdits premier et second horodatages doit être inférieure à une durée prédéfinie (18).

7. Système selon la revendication 1, dans lequel ladite politique de sécurité spécifie que l'instrument de paiement doit avoir reçu des données d'accusé de réception (32) générées par le dispositif personnel après la capture auprès de l'utilisateur d'une entrée d'accord (38) reflétant la reconnaissance de la connaissance du sous-ensemble par l'utilisateur.

8. Système selon la revendication 1, dans lequel la transaction financière est une transaction de paiement et dans lequel le sous-ensemble comprend un montant de paiement.

9. Système selon la revendication 1, dans lequel l'instrument de paiement est une carte à puce, une bague, un porte-clés, un bracelet ou une micropuce insérée dans le corps de l'utilisateur.

10. Système selon la revendication 1, dans lequel le dispositif personnel est un téléphone, une tablette PC, un assistant numérique personnel ou un dispositif portable comme une bague, un porte-clés, un bracelet ou une paire de lunettes.
